# EUROPÄISCHE PATENTANMELDUNG

(11) **EP 4 342 656 A1**
(43) Veröffentlichungstag der Anmeldung: **27.03.2024**
(21) Anmeldenummer: 23193217.9
(22) Anmeldetag: 24.08.2023
(51) Int. Cl.: B29C 49/78, B29C 49/36

(54) **VERFAHREN UND VORRICHTUNG ZUM UMFORMEN VON KUNSTSTOFFVORFORMLINGEN ZU KUNSTSTOFFBEHÄLTNISSEN MIT GEREGELTEM RESERVOIRDRUCK**

(30) Priorität: 08.09.2022 DE 102022122880
(71) Anmelder: Krones AG, 93073 Neutraubling (DE)
(72) Erfinder: Meier, Dominik, 93073 Neutraubling (DE); Hengl, Benedikt, 93073 Neutraubling (DE); Vogler, Daniel, 93073 Neutraubling (DE); Kulzer, Markus, 93073 Neutraubling (DE)
(74) Vertreter: Bittner, Bernhard

(57) **Zusammenfassung**

Verfahren zum Umformen von Kunststoffvorformlingen zu Kunststoffbehältnissen (15) mittels wenigstens einer Vorrichtung zum Umformen von Kunststoffvorformlingen zu Kunststoffbehältnissen, wobei Kunststoffvorformlinge mit einem fließfähigen und insbesondere gasförmigen Medium beaufschlagt werden und so zu den Kunststoffbehältnissen umgeformt werden, wobei die Kunststoffvorformlinge mit unterschiedlichen Druckniveaus (p1, Pi, p2) beaufschlagt werden und das fließfähige Medium in wenigstens zwei Reservoirs gespeichert wird und von diesen Reservoirs den Kunststoffvorformlingen zugeführt wird und wobei wenigstens eines dieser Reservoirs von einer Druckbereitstellungseinrichtung mit dem fließfähigen Medium versorgt wird, wobei der Solldruck in wenigstens einem Reservoir geregelt wird, und wobei dieser Solldruck mit einem Ist-Druck in diesem Reservoir verglichen wird, und ein für diesen Vergleich charakteristischer Wert ermittelt wird. Erfindungsgemäß wird anhand dieses Werts ein Offsetwert geregelt wird und insbesondere derart geregelt wird, dass sich im Reservoir ein vorgegebener Druck und insbesondere der Soll-Druck einstellt.

## Beschreibung

Die vorliegende Erfindung bezieht sich auf ein Verfahren und eine Vorrichtung zum Umformen von Kunststoffvorformlingen zu Kunststoffbehältnissen. Derartige Verfahren und Vorrichtung sind aus dem Stand der Technik seit langem bekannt. Dabei werden üblicherweise erwärmte Kunststoffvorformlinge mit einem fließfähigen Medium und insbesondere mit Druckluft expandiert und so zu Kunststoffbehältnissen und insbesondere Kunststoffflaschen umgeformt. Zu diesem Zweck werden üblicherweise Druckluftreservoirs wie beispielsweise Ringkanäle eingesetzt. Die Expansion der Kunststoffvorformlinge findet üblicherweise in mehreren Druckstufen statt, beginnend mit einem geringeren Anfangsdruck über einen erhöhten Zwischenblasdruck und einen noch höheren Fertigblasdruck.

Die Druckniveaus der Blasluftreservoirs, beispielsweise Blasluftringkanäle und insbesondere der Reservoirs zum Vorblasen und Zwischenblasen (im Folgenden als PI und PI+ bezeichnet) werden im Stand der Technik mit festen Offsetwerten, d. h. Korrekturwerten beaufschlagt, um das Druckniveau in einem bestimmten Betriebszustand exakt zu erreichen. Dabei werden bevorzugt diese Korrekturwerte auf die Soll-Werte aufgeschlagen.

Im Stand der Technik tritt dabei teilweise das Problem auf, dass es bestimmte Betriebszustände gibt, in denen der Ist-Reservoirdruck beispielsweise ein Ist-Ringkanaldruck von einem Soll-Wert abweicht. Dies kann insbesondere bei niedrigen Druckniveaus (insbesondere bei Drücken kleiner als 6 bar) auftreten.

Weiterhin hängt der Korrekturwert teilweise auch von den verwendeten Vorformlingen oder anderen Parametern wie etwa BPHC (bottles per hour per cavity) und Druck ab. Damit ist der Korrekturwert jedoch in der Regel kein Sortenparameter. Dies bedeutet, dass der Korrekturwert nicht immer ideal für alle Betriebszustände und auch nicht alle Behältnisse ist.

Weiterhin kann im Regelbetrieb wertvolles Recyclingpotenzial ungenutzt bleiben. Der Luftverbrauch ist auf diese Weise oft deutlich höher als er sein könnte. In konkreten Beispielen wurden trotz korrekter Offseteinstellung Druckverbräuche erreicht, welche ca. 25 % höher waren als sie theoretisch sein könnten.

Der vorliegenden Erfindung liegt daher die Aufgabe zugrunde, derartige Vorrichtungen zum Umformen von Kunststoffvorformlingen zu Kunststoffbehältnissen effizienter zu gestalten. Dies wird erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Umformen von Kunststoffvorformlingen zu Kunststoffbehältnissen mittels wenigstens einer Vorrichtung zum Umformen von Kunststoffvorformlingen zu Kunststoffbehältnissen werden Kunststoffvorformlinge mit einem fließfähigen und insbesondere gasförmigen Medium beaufschlagt und so zu den Kunststoffbehältnissen umgeformt. Dabei werden die Kunststoffvorformlinge mit unterschiedlichen Druckniveaus beaufschlagt und das fließfähige Medium wird in wenigstens zwei Reservoirs gespeichert und von diesen (Druck-) Reservoirs den Kunststoffvorformlingen zugeführt. Weiterhin wird wenigstens eines dieser Reservoirs von einer Druckbereitstellungseinrichtung mit dem fließfähigen Medium versorgt und/oder dieses fließfähige Medium wird diesem Druckreservoir von einer Druckbereitstellungseinrichtung zur Verfügung gestellt. Dabei wird bevorzugt der Solldruck in wenigstens einem Reservoir geregelt und dieser Solldruck mit einem Ist-druck in diesem Reservoir verglichen, und ein für diesen Vergleich charakteristischer Wert ermittelt.

Erfindungsgemäß wird anhand dieses (charakteristischen) Werts ein Offset geregelt und insbesondere derart geregelt, dass sich im Reservoir ein vorgegebener Druck und insbesondere der Soll-Druck einstellt.

Bevorzugt wird dabei auch der Druck des fließfähigen Mediums in dem Reservoir und/oder die Zuführung des fließfähigen Mediums von der Druckbereitstellungseinrichtung zu dem Reservoir geregelt und insbesondere in Abhängigkeit von einem Betriebszustand der Vorrichtung geregelt. Bevorzugt wird wenigstens zeitweise das fließfähige Medium von dem Behältnis in wenigstens ein Druckreservoir zurückgeführt (dieser Prozess wird unten auch als Recycling bezeichnet). Bevorzugt wird der Druck in dem Reservoir jedoch indirekt durch die Regelung des Offsetwertes geregelt.

Unter einer Regelung des Drucks in dem Reservoir wird dabei insbesondere verstanden, dass die Zufuhr des gasförmigen Mediums von der Druckbereitstellungeinrichtung zu dem Reservoir geregelt wird bzw. geregelt ist.

Im Stand der Technik fand keine Regelung dieses Druckes statt, sondern dieser wurde fest vorgegeben, wobei teilweise zu einem bestimmten Sollwert des Druckes ein (fester) Offset addiert wurde.

Besonders bevorzugt wird dem Reservoir ein Druck zugeführt, der oberhalb eines bestimmten Soll-Werts für diesen Druck liegt. Damit wird bevorzugt zu dem Soll-Wert eines Drucks in diesem Reservoir ein bestimmter Offset ermittelt und ein entsprechender um diesen Offset addierter Wert des Drucks auf das Druckreservoir gegeben. Bevorzugt ist dabei dieser Offset variabel und wird besonders bevorzugt gesteuert und besonders bevorzugt geregelt.

Im Stand der Technik ist dieser Offset konstant, wie oben ausgeführt. Die Erfindung schlägt nun vor, diesen Offset zu steuern und bevorzugt zu regeln und besonders bevorzugt in Abhängigkeit von unterschiedlichen Betriebszuständen zu regeln. Auf diese Weise ist eine flexiblere Anpassung von Verfahrensbedingungen möglich und damit auch eine höhere Energieeinsparung. Bei der Druckbereitstellungseinrichtung kann es sich bevorzugt um einen Kompressor handeln, aber auch etwa um einen Druckanschluss in einer Werkshalle. Besonders bevorzugt wird die Zuführung des Drucks mittels einer Regeleinrichtung geregelt. Hierbei kann es sich beispielsweise um einen sogenannten Domdruckregler handeln.

Bevorzugt werden wenigstens zwei Betriebszustände der Vorrichtung definiert und der Offset wird in Abhängigkeit von verschiedenen Betriebszuständen geregelt. Bevorzugt erfolgt in diesen beiden Betriebszuständen eine unterschiedliche Regelung des Drucks in dem Reservoir. So kann es sich beispielsweise bei einem Betriebszustand um einen Arbeitsbetrieb handeln, in dem Kunststoffvorformling zu den Behältnissen expandiert werden.

In einem bevorzugten Verfahren wird der Offset in den jeweiligen Betriebszuständen derart geregelt, dass der Soll-Druck im Reservoir über alle Betriebszustände konstant ist. Unter konstant wird dabei verstanden, dass Abweichungen über die Zeit geringer als 20%, bevorzugt geringer als 15%, bevorzugt geringer als 10%, bevorzugt geringer als 5% und besonders bevorzugt geringer als 3% sind. Ein erster Betriebszustand ist dabei bevorzugt ein Zustand, in welchem dem Reservoir keine Druckluft abgenommen wird (keine Flasche wird geblasen) und ein zweiter Betriebszustand ist bevorzugt ein Zustand ist, in welchem dem Reservoir Druckluft abgenommen wird (Flasche wird geblasen). Ein dritter Betriebszustand ist bevorzugt ein Zustand ist, in welchem in das Reservoir wenigstens zeitweise ein Anteil des fließfähigen Mediums von einem anderen Reservoir und/oder von dem zu expandierenden Behältnis recycelt wird.

Bevorzugt ist noch wenigstens ein drittes Druckreservoir vorgesehen, welches das fließfähige Medium unter einem bestimmten Druck speichern kann. Bevorzugt weicht ein Druck des fließfähigen Mediums in diesem dritten Reservoir von den Drücken in dem ersten und in dem zweiten Druckreservoir ab. Besonders bevorzugt handelt es sich bei dem fließfähigen Medium Druckluft.

Bei einem weiteren bevorzugten Verfahren wird der Ist-Druck mittels einer Druckmesseinrichtung gemessen und insbesondere einer in dem Reservoir angeordneten Druckmesseinrichtung. Bevorzugt wird der Ist-Druck kontinuierlich gemessen. Denkbar wäre allerdings auch den Ist-Druck zeitweise, beispielsweise in vorgegebenen Zeitabständen zu messen. Auch eine Druckmessung in einer Verbindungsleitung zu dem Reservoir wäre denkbar oder mehrere verteilte Druckmesseinrichtungen.

Bei einem weiteren bevorzugten Verfahren wird in wenigstens einem Betriebszustand das Reservoir mit dem fließfähigen Medium befüllt und dabei ein Druck des fließfähigen Mediums geregelt und bevorzugt iterativ auf einen Zieldruck und/oder Soll-Druck geregelt. Die Höhe der Iterationsschritte ist bevorzugt variabel oder ein fester Wert. Bevorzugt wird das in mehreren Betriebszuständen und bevorzugt in allen Betriebszuständen mit dem fließfähigen Medium befüllt und dabei ein Druck des fließfähigen Mediums geregelt und bevorzugt iterativ auf einen Zieldruck und/oder Soll-Druck geregelt. So ist es möglich, dass zunächst der Druck bis auf einen bestimmten Wert angepasst wird und dann in einer Vielzahl von Schritten auf den gewünschten Zieldruck, wobei sich bei diesem Zieldruck um den oben erwähnten Soll-Druck handeln kann, aber auch um den Soll-Druck, dem ein gewisser Offset hinzuaddiert ist.

Damit ist es möglich, dass bei einem ersten Betriebszustand beispielsweise einer Situation, bei der die Vorrichtung angeschaltet wurde, sich ein Regler einen Zieldruck annähert und bevorzugt einseitig einem Zieldruck annähert. So kann beispielsweise zunächst ein Ausgangswert des Drucks eingestellt werden, beispielsweise 80 % des Sprungwerts bzw. Zieldrucks und im Anschluss idealerweise der Druck erhöht werden, bis der Soll-Druck und der Ist-Druck gleich sind. Bevorzugt handelt es sich bei diesem Betriebszustand um einen Inbetriebnahmezustand, in dem ein Arbeitsbetrieb der Vorrichtung vorbereitet wird.

Bei einer zweiten Betriebssituation ist das (Druck)Reservoir bzw. ein Ringkanal, der als Reservoir fungiert, befüllt. Die ersten Kunststoffvorformlinge laufen in die Vorrichtung, beispielsweise in ein Blasrad mit einer Vielzahl von Umformungsstationen ein. Die Produktion kann hier ohne ein Druckluftrecycling oder ohne sogenannte "air wizards (AW)" beginnen. Sobald das erste Behältnis bzw. der erste Kunststoffvorformling in das Blasrad einfährt, kann eine Ventileinrichtung wie beispielsweise ein Proportionalventil mit einer weiteren Sprungantwort reagieren. Dieser Offset (auf den gegenwärtigen Soll-Druck) ist bevorzugt in einer Maschinensteuerung mit einer Variablen (beispielsweise X) abgelegt.

Im laufenden Betrieb wird dann bevorzugt die Ventileinrichtung wie ein Proportionalventil geregelt und besonders bevorzugt fortlaufend geregelt. Auf diese Weise kann sich diese Variable X bevorzugt verändern. Wenn die Vorrichtung in einen Regelbetrieb übergeht, in dem beispielsweise ein Recycling stattfindet, oder wenn das letzte Behältnis vor einem Betriebsstopp das Blasrad verlässt, wird der letzte bekannte Offsetwert bevorzugt wieder in die Ausgangsvariable X zurückgeschrieben. Bevorzugt handelt es sich daher bei einem weiteren Betriebszustand um einen Betriebszustand, in dem Kunststoffvorformlinge expandiert werden aber zusätzlich auch ein Recycling von Druckluft erfolgt.

Bevorzugt wird beim Wiederanfahren der Vorrichtung der Wert X (aus dem Speicher) ausgelesen und dem aktuellen Soll-Wert aufaddiert. Im Vergleich zum Stand der Technik ist dabei dieser Wert X das, was er auch im Stand der Technik der Offset ist, allerdings mit dem Unterschied, dass dieser Offsetwert hier variabel ist und angepasst werden kann. Damit ist dieser Wert X eine Art Korrekturwert, der dem Betriebszustand wie hier beschrieben zugeführt wird aber der nur zum Wiederanfahren herangezogen wird und ansonsten von einer Steuerung und insbesondere einer Regelung verändert werden kann.

Bei einer weiteren Situation, beispielsweise bei dem Übergang einer Produktion ohne Recycling in einen Regelbetrieb mit Recycling kann eine weitere Anpassung des Drucks in dem Reservoir erfolgen. Sobald hier das erste Behältnis bzw. der erste Kunststoffvorformling in eine Recyclingphase kommt, geht bevorzugt das jeweilige (Druck-) Reservoir in einen Recyclingregelbetrieb über. Eine Zustandsänderung kann in einem eingeschwungenen Prozess erfolgen und auch sprunghaft erfolgen.

Hier können beispielsweise in der Steuerung hinterlegte Variablen verwendet werden, beispielsweise YN und ZN. Bei diesen Variablen YN und ZN handelt es sich bevorzugt ebenso wie bei dem oben beschriebenen Wert X, um nicht sichtbare und nicht editierbare Sortenparameter, welche für jedes Druckreservoir, welches recycelt werden soll (zum Beispiel YP1, YPi, YPi+, ZP1, ZPi, ZPi+). Bevorzugt wird beim Einlesen der Wert YN auf die jeweilige Ventileinrichtung bzw. das jeweilige Proportionalventil angerechnet. In diesem Fall ersetzt also der Wert YN den bis dahin gültigen Wert X) und ZN stellt eine Stellgröße des zugehörigen Recycling - Regelkreises dar. Damit wird insoweit eine Wiederanfahrautomatik beschrieben.

Bei neuen Prozessen ist es erforderlich, dass sich die Luftrückgewinnung zuerst einregelt. In diesem Falle erfolgt nach der oben beschriebenen Situation 2 bzw. dem oben beschriebenen Betriebszustand keine sprunghafte Veränderung, sondern eine iterative Einlernphase. Weil sowohl ein Regelkreis eines Proportionalventils als auch ein Regelkreis des Recyclings auf die gleiche Messgröße (den Ist-Druck in dem Druckreservoir) verweist, wird bevorzugt eines der beiden Stellglieder gesteuert. Es bietet sich an, hierfür das Proportionalventil zu verwenden.

Beim Übergang in den Recyclingbetrieb wird die aktuelle Stellgröße des Proportionalventils (Soll-Wert+X) um einen vorgegebenen Wert, beispielsweise -0,3 bar (bevorzugt einem Wert zwischen -0,1 und -0,8) gesteuert und bevorzugt nach unten gesteuert. Infolgedessen fällt der Ringkanaldruck leicht ab. Ein Recyclingregler wird bevorzugt aktiv und reagiert insbesondere unmittelbar mit einem Anstieg der Recyclingdauer.

Ein Ringkanaldruck gleicht sich bevorzugt wieder auf Soll-Druckniveau an. Dieser Vorgang wird dann bevorzugt mehrmals wiederholt, und zwar insbesondere so lange, bis die Absenkung des Proportionalventils ein- bis zweimal in Folge zu keinem weiteren Druckeinbruch mehr geführt hat.

Daneben wäre es auch möglich, eine Blaskurve auszuwerten, beispielsweise über ein Steigungsdreieck auszuwerten. Diese einmal bis zweimal in Folge sind vorteilhaft, damit eine Einrichtung wie ein Domdruckregler als Rückfallebene vorhanden bleibt, wenn beispielsweise ein Behältnis platzt oder andere Leckagen den Blasablauf stören.

Bei einem weiteren Sonderfall (bei dem es sich ebenfalls um einen Betriebszustand handeln kann) liegt in einer der oben genannten Situationen eine grobe Leckage vor (beispielsweise ein Schlauchplatzer). In diesen Fällen wird bevorzugt eine Plausibilitätsabfrage durchgeführt, damit ein Proportionalventil nicht grenzenlos nach oben regelt. Als Beispiel könnten hier Differenzen oder Drücke in einer gewissen Größenordnung, beispielsweise von 3-5 bar zugrunde gelegt werden.

Bei einem bevorzugten Verfahren ist der für den Vergleich charakteristische Wert eine Differenz oder ein Verhältnis der Drücke. Insbesondere eine Differenz zwischen Ist-Druck und Soll-Druck oder umgekehrt oder auch ein Verhältnis.

Bei einem weiteren vorteilhaften Verfahren wird der Druck in dem Druckreservoir auf ein vorgegebenes Druckniveau gebracht. Bevorzugt soll dabei der Druck in dem Reservoir konstant sein.

Bevorzugt erfolgt diese Steuerung und Regelung mittels einer Ventileinrichtung und insbesondere eines Proportionalventils. Daher kann der Druck schwanken. Besonders bevorzugt wird der Druck und/oder der Offset in vorgegebenen Grenzen geregelt, beispielsweise in Grenzen von +/- 30 %, bevorzugt +/- 20 %, bevorzugt +/- 10 %. Besonders bevorzugt erfolgt eine kontinuierliche Steuerung und/oder Regelung dieses Drucks. Damit wird bevorzugt der oben erwähnte Offset an eine Betriebssituation angepasst.

Besonders bevorzugt wird der Druck im Reservoir mittels eines sogenannten Domdruckreglers geregelt. Dieser kann dabei zwischen der Druckbereitstellungseinrichtung und dem jeweiligen Druckreservoir geschalten sein. Bei einer bevorzugten Ausführungsform wird das fließfähige Medium mittels einer Verteileinrichtung und insbesondere mittels eines Drehverteilers an das oder die Druckreservoirs verteilt und/oder diese damit beaufschlagt.

Besonders bevorzugt wird wenigstens zeitweise ein Anteil des fließfähigen Mediums von einem Reservoir und/oder dem zu expandierenden Behältnis in ein anderes (Druck-) Reservoir recycelt bzw. in dieses (zurück)geführt. Besonders bevorzugt gibt es mehrere Reservoirs und in diesem Betriebszustand findet ein Recycling statt.

Bei einem bevorzugten Verfahren wird die Druckbereitstellungseinrichtung hinsichtlich der Höhe des von ihr ausgegebenen Druckes gesteuert und/oder der von der Druckbereitstellungseinrichtung bereitgestellte Druck wird von einer Reduzierstation auf den jeweiligen Reservoirdruck reduziert.

Bei einem weiteren bevorzugten Verfahren verwendet die Reduzierstation ein Regelglied und ein Stellglied, wobei das Stellglied das Regelglied ansteuert, um einen Soll-Druck im Reservoir einzuregeln, wobei es sich insbesondere bei dem Regelglied um einen Domdruckregeler handelt und/oder es sich insbesondere bei dem Stellglied um ein Proportionalventil handelt.

Besonders bevorzugt erfolgt das oben beschriebene Verfahren mit den nachfolgenden Verfahrensschritten. Zunächst wird das fließfähige Medium in das Reservoir bis zu einem vorgegebenen Anfangsdruck geführt. Anschließend wird der Druck bis zu einem Wert erhöht, der oberhalb eines Soll-Drucks liegt. Besonders bevorzugt erfolgt ein weiteres Erhöhen des Drucks bei oder vor dem Beginn des Umformungsprozesses bzw. des Arbeitsbetriebs.

Bei einem weiteren bevorzugten Verfahren wird der Druck in dem Reservoir zu einem späteren Zeitpunkt wieder abgesenkt und besonders bevorzugt stufenweise abgesenkt. So ist es möglich, dass der Druck im späteren Betrieb wieder bis annähernd auf den Soll-Wert oder auch auf den Soll-Wert zurückgeführt wird.

Die vorliegende Erfindung ist weiterhin auf eine Vorrichtung zum Umformen von Kunststoffvorformlingen zu Kunststoffbehältnissen mit wenigstens einer Umformungsstation gerichtet, welche mittels einer Beaufschlagungseinrichtung Kunststoffvorformlinge mit einem fließfähigen und insbesondere gasförmigen Medium beaufschlagt und diese so zu den Kunststoffbehältnissen umgeformt und insbesondere expandiert.

Dabei ist die Umformungsstation dazu geeignet und bestimmt, die Kunststoffvorformlinge mit unterschiedlichen Druckniveaus zu beaufschlagen, wobei die Vorrichtung wenigstens ein erstes (Druck-) Reservoir und zum Speichern des fließfähigen Mediums unter einem ersten Druck und ein zweites (Druck-) Reservoir zum Speichern des fließfähigen Mediums unter einem zweiten Druck aufweist (wobei bevorzugt der erste und der zweite Druck untschiedlich sind) und weiterhin wenigstens eine Zuführeinrichtung vorgesehen ist, welche das fließfähige Medium von diesen Reservoirs den Kunststoffvorformlingen zuführt. Weiterhin weist die Vorrichtung eine Druckbereitstellungseinrichtung auf, welche wenigstens eines dieser Reservoirs mit dem fließfähigen Medium versorgt. Dabei ist der Solldruck in wenigstens einem Reservoir regelbar, und dieser Solldruck ist mit einem Ist-Druck in diesem Reservoir vergleichbar, und ein für diesen Vergleich charakteristischer Wert ermittelbar ist.

Erfindungsgemäß ist der von der Druckbereitstellungseinrichtung ausgegebene Druck steuerbar und/oder die Vorrichtung weist eine Reduzierstation auf, welche den von der Druckbereitstellungseinrichtung an dieses Reservoir zugeführten Druck regelt.

Bevorzugt kann die Vorrichtung auch eine Steuerungseinrichtung aufweisen, welche den von der Druckbereitstellungseinrichtung an dieses Reservoir zugeführten Druck und/oder die Zuführung des fließfähigen Mediums von der Druckbereitstellungseinrichtung zu dem Reservoir regelt. Insbesondere ist diese Steuerungseinrichtung dazu geeignet und bestimmt, das erste Reservoir mit dem ersten Druck bzw. den Druck zu dem ersten Reservoir, in dem der geringste Druck gespeichert wird, zu steuern und/oder zu regeln.

Bevorzugt weist die Vorrichtung einen bewegbaren und insbesondere einen drehbaren Träger auf. Besonders bevorzugt sind an diesem Träger mehrere Umformungsstationen angeordnet. Diese weisen bevorzugt jeweils Blasformen auf, innerhalb deren die Umformung erfolgt.

Besonders bevorzugt ist jeder Umformungsstation eine Ventileinrichtung und insbesondere ein Ventilblock zugeordnet, der wiederum eine Vielzahl von Ventilen aufweist, um die Kunststoffvorformlinge mit unterschiedlichen Drücken zu beaufschlagen. Bevorzugt ist auch jeder Umformungsstation eine Reckstange zugeordnet, welche in die Kunststoffvorformlinge einführbar ist, um diese in ihrer Längsrichtung zu dehnen. Bevorzugt sind mehrere Zuführleitungen vorgesehen, welche mehrere Reservoirs mit den Umformungsstationen und insbesondere mit den Ventileinrichtungen verbinden.

Besonders bevorzugt ist eine Verteileinrichtung vorgesehen, welche das von der Druckbereitstellungseinrichtung zur Verfügung gestellte fließfähige Medium auf die einzelnen Reservoirs und so letztlich auch auf die einzelnen Umformungsstationen verteilt. Besonders bevorzugt ist die Druckbereitstellungseinrichtung stationär ausgeführt.

Besonders bevorzugt weist die Vorrichtung noch wenigstens ein drittes Druckreservoir und bevorzugt auch wenigstens ein viertes Druckreservoir auf. Besonders bevorzugt ist wenigstens eines dieser Druckreservoirs und sind bevorzugt mehrere Druckreservoirs als Ringkanäle ausgeführt, die insbesondere an dem oben erwähnten, drehbaren Träger angeordnet sind.

Besonders bevorzugt steuert und insbesondere regelt die Steuerungseinrichtung den an das Reservoir zugeführten Druck in Abhängigkeit von einem Betriebszustand der Vorrichtung. Dies wurde oben genauer beschrieben.

Besonders bevorzugt ist wenigstens zeitweise das fließfähige Medium von dem zu expandierenden Behältnis oder einem zweiten Reservoir zu dem ersten Reservoir (rück)führbar. Auf diese Weise kann ein Druckluftluftrecycling erfolgen. Besonders bevorzugt sind zur Durchführung dieses Recyclings wenigstens ein und bevorzugt eine Vielzahl von Ventilen vorgesehen.

Bei einer bevorzugten Ausführungsform weist die Reduzierstation ein Regelglied und ein Stellglied auf, wobei bevorzugt das Regelglied ein Domdruckregler und/oder das Stellglied ein Proportionalventil ist.

Besonders bevorzugt ist wenigstens ein Reservoir und sind bevorzugt mehrere Reservoirs als Ringkanäle ausgebildet.

Bei einer weiteren bevorzugten Ausführungsform weist die Umformungsstation eine Ventilanordnung mit einer Vielzahl von Ventilen auf, um die Behältnisse mit den unterschiedlichen Druckstufen zu beaufschlagen. Besonders bevorzugt ist wenigstens eines dieser Ventile ein Proportionalventil.

Besonders bevorzugt weist die Vorrichtung wenigstens eine Sensoreinrichtung und insbesondere eine Druckmesseinrichtung auf, welche wenigstens einem Druckreservoir zugeordnet ist. Besonders bevorzugt ist diese Sensoreinrichtung dazu geeignet und bestimmt einen Druck innerhalb des Reservoirs kontinuierlich zu bestimmen. Bei einer weiteren vorteilhaften Ausführungsform weist die Vorrichtung auch eine Sensoreinrichtung auf, welche den von der Druckbereitstellungseinrichtung zur Verfügung gestellten Druck erfasst und besonders bevorzugt kontinuierlich erfasst.

Besonders bevorzugt ist die Steuerungseinrichtung dazu geeignet, den Druck unter Berücksichtigung eines Soll-Drucks zu regeln und bevorzugt diesem Soll-Druck mit einem Offsetdruck und insbesondere einem variablen Offsetdruck aufzuaddieren.

Bei einer bevorzugten Ausführungsform weist die Vorrichtung eine Vergleichseinrichtung auf, welche dazu geeignet ist, einen Soll-Druck in einem Reservoir mit einem Ist-Druck in diesem Reservoir zu vergleichen und einen für diesen Vergleich charakteristischen Wert auszugeben und bevorzugt eine Regeleinrichtung den Druck in diesem Reservoir basierend auf diesem charakteristischen Wert regelt. Besonders bevorzugt wird dabei der Offset (Differenz zwischen Solldruck und Istdruck im Reservoir) derart geregelt, so dass der Solldruck in dem Reservoir konstant ist.

Weitere Vorteile und Ausführungsformen ergeben sich aus den beigefügten Zeichnungen:
Darin zeigen:
- Fig. 1: eine schematische Darstellung einer erfindungsgemäßen Vorrichtung;
- Fig. 2: eine Darstellung eines Druckverlaufs zur Veranschaulichung der Erfindung;
- Fig. 3: eine schematische Darstellung zur Durchführung des erfindungsgemäßen Verfahrens.

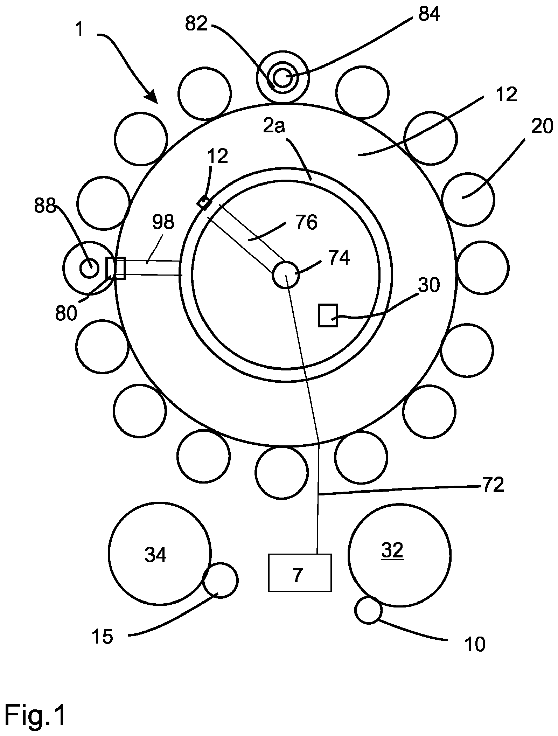

Fig. 1 zeigt eine Vorrichtung 1 zum Umformen von Kunststoffvorformlingen 10 zu Kunststoffbehältnissen 15. Diese Vorrichtung weist einen drehbaren Träger 12 auf, an dem eine Vielzahl von Umformungsstationen 20 angeordnet ist. Diese einzelnen Umformungsstationen weisen jeweils Blasformen 82 auf, die in ihrem Inneren einen Hohlraum zum Expandieren der Kunststoffvorformlinge ausbilden.

Das Bezugszeichen 84 kennzeichnet eine Beaufschlagungseinrichtung, welche zum Expandieren der Kunststoffvorformlinge 10 dient. Hierbei kann es sich beispielsweise um eine Blasdüse handeln, welche an eine Mündung der Kunststoffvorformlinge anlegbar ist, um diese so zu expandieren. Das Bezugszeichen 80 kennzeichnet eine Ventilanordnung wie einen Ventilblock, der eine Vielzahl von Ventilen aufweist, welche die Beaufschlagung der Kunststoffvorformlinge mit unterschiedlichen Druckniveaus steuern.

Bei einem bevorzugten Verfahren werden die Kunststoffvorformlinge zunächst mit einem Vorblasdruck P1 beaufschlagt, anschließend mit einem Zwischenblasdruck Pi, der höher ist als der Vorblasdruck und schließlich mit einem Fertigblasdruck P2, der höher ist als der Zwischenblasdruck Pi. Nach der Expansion der Kunststoffbehältnisse werden bevorzugt die Drücke bzw. die Druckluft wieder von dem Behältnis in die einzelnen Druckreservoirs zurückgeführt.

Das Bezugszeichen 88 kennzeichnet eine Reckstange, die dazu dient, die Kunststoffvorformlinge in ihrer Längsrichtung zu dehnen. Bevorzugt weisen sämtliche Umformungsstationen derartige Blasformen 82 sowie Reckstangen 88 auf. Bevorzugt liegt die Anzahl dieser Umformungsstationen zwischen 2 und 100, bevorzugt zwischen 4 und 60, bevorzugt zwischen 6 und 40.

Die Kunststoffvorformlinge 10 werden über eine erste Transporteinrichtung 32 wie insbesondere aber nicht ausschließlich einen Transportstern der Vorrichtung zugeführt. Über eine zweite Transporteinrichtung 34 werden die Kunststoffbehältnisse 15 abtransportiert.

Das Bezugszeichen 7 kennzeichnet eine Druckbereitstellungseinrichtung wie etwa einen Kompressor oder auch ein Druckluftanschluss. Die Druckluft wird über eine Verbindungsleitung 72 zu einem Drehverteiler 74 gefördert und von diesem über eine weitere Leitung 76 an das Reservoir 2a angegeben, bei dem es sich hier um einen Ringkanal handelt.

Neben diesem dargestellten Ringkanal 2a sind bevorzugt noch weitere Ringkanäle vorgesehen, die in der in Fig. 1 gezeigten Darstellung jedoch durch den Ringkanal 2a verdeckt sind, beispielsweise darunterliegen. Das Bezugszeichen 98 kennzeichnet eine Verbindungsleitung, welche die Druckluft an eine Umformungsstation 20 bzw. deren Ventilblock 90 abgibt. Bevorzugt ist jeder der Ringkanäle über entsprechende Verbindungsleitungen mit sämtlichen Umformungsstationen verbunden.

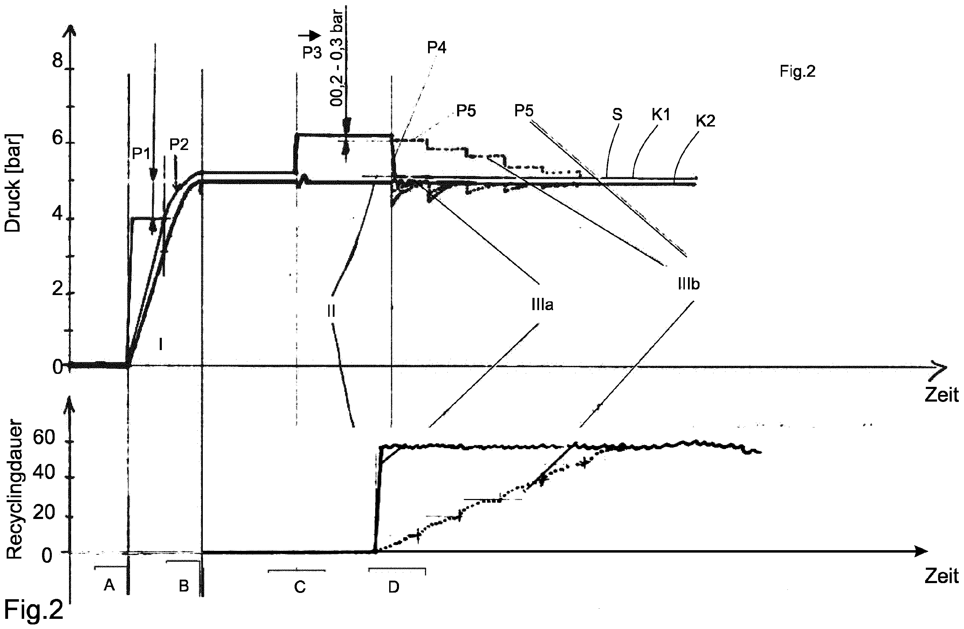

Fig. 2 zeigt eine Darstellung zur Veranschaulichung der Druckeinstellung an dem ersten Druckreservoir 2a, welches bevorzugt zur Beaufschlagung der Kunststoffvorformlinge mit dem Vorblasdruck P1 dient. Dabei ist auf der Koordinate die Zeit aufgetragen und auf der Koordinate in der oberen Darstellung der (Reservoir)Druck in bar und auf der unteren Darstellung eine Dauer eines Recyclings.

Das Bezugszeichen I kennzeichnet einen Startwert des Drucks, d.h. den Wert des Drucks mit welchem das Druckreservoir anfänglich beaufschlagt wird. Hier wird (vgl. Kurve K1) der Druck zunächst auf einen Anfangswert eingestellt (P1) und anschließend iterativ (Pfeil P2) ein Soll-Wert angefahren. Man erkennt dabei, dass dieser Soll-Wert etwas höher liegt als der gewünschte Soll-Wert S2 für das Druckluftreservoir (Kurve K2). In einem Betriebszustand 2, in dem das erste Behältnis in die Anlage eingefahren ist, wird der Druck erhöht (Pfeil P3) bis und für einen vorgegebenen Zeitraum gehalten (Pfeil P3). Anschließend wird der Druck in einer Einlernphase P5 stufenweise abgesenkt. In dieser Phase wird der letzte eingestellte Druckwert abgespeichert. Bevorzugt wird hier ein additiver Offset des Drucks geändert bzw. angepasst.

Das Bezugszeichen A kennzeichnet einen Betriebszustand (insbesondere dessen Zeitraum), bei dem die Maschine noch aus ist. In dem Zeitraum B ist die Maschine angeschaltet und die Konsole bzw. die Druckreservoirs werden belüftet. Zu dem Zeitpunkt C ist der erste Kunststoffvorformling am Blasrad und der Arbeitsbetrieb beginnt. Ab dem Zeitpunkt D die befindet sich die erste Flasche oder der Prozess im Recyclingbetrieb. In dieser Phase wird, wie oben erwähnt der Druck wieder stufenweise an den Soll-Druck S angepasst. Das Bezugszeichen IIIb kennzeichnet in diesem Betriebszustand eine Einlernphase, in der der Druck angepasst wird, beispielsweise auf die in dem unteren Teil der Figur gezeigte Stellgröße des Recyclings. Entsprechend steigt in diesem Zeitraum auch die Länge der Recyclingdauer an.

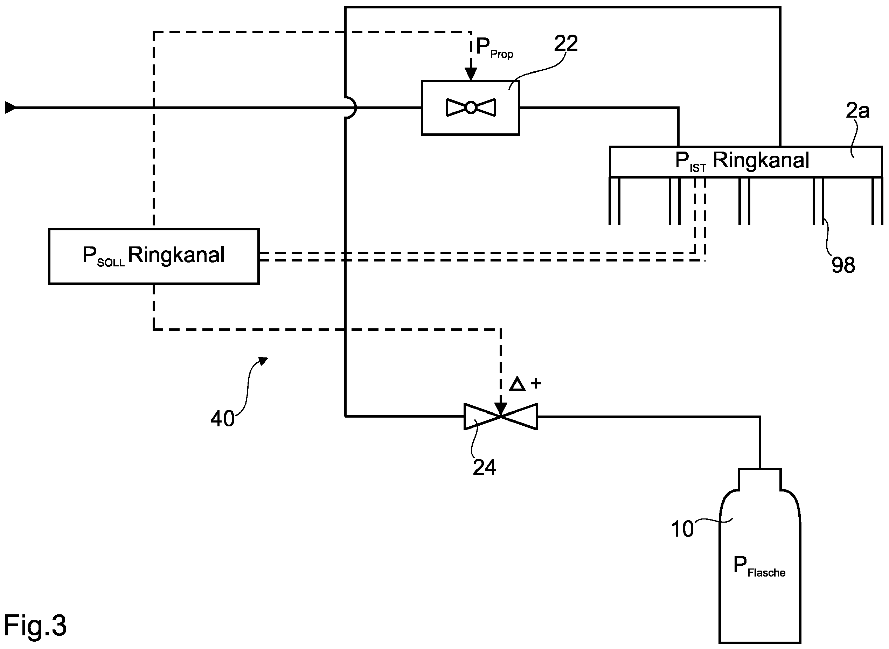

Fig. 3 zeigt eine Darstellung zur Veranschaulichung der Funktionsweise der Erfindung. Dabei ist hier das Druckreservoir 2a gezeigt, in dem ein Druck P-Soll vorliegt dem ein bestimmter Ist-Druck vorliegt. Vorteilhaft handelt es sich hier um einen Ringkanal. Über einen Regelkreis 40, der ein Proportionalventil 22 enthält, wird der Druck Pist in dem Reservoir 2a gesteuert. Hierbei erfolgt ein Abgleich mit einem Psoll - Druck in diesem Ringkanal.

Von dem Druckreservoir 2a gelangt die Luft über ein Ventil 24 letztlich zu dem Behältnis, in dem der Druck PF herrscht. Ausgehend von diesem Behältnis ist auch durch Ansteuerung des Ventils wiederum ein Recycling möglich, wodurch Luftdruck zurück in den Ringkanal bzw. das Reservoir 2a geführt wird.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zum Umformen von Kunststoffvorformlingen zu Kunststoffbehältnissen (15) mittels wenigstens einer Vorrichtung zum Umformen von Kunststoffvorformlingen zu Kunststoffbehältnissen, wobei Kunststoffvorformlinge mit einem fließfähigen und insbesondere gasförmigen Medium beaufschlagt werden und so zu den Kunststoffbehältnissen umgeformt werden, wobei die Kunststoffvorformlinge mit unterschiedlichen Druckniveaus (p1, Pi, p2) beaufschlagt werden und das fließfähige Medium in wenigstens zwei Reservoirs gespeichert wird und von diesen Reservoirs den Kunststoffvorformlingen zugeführt wird und wobei wenigstens eines dieser Reservoirs von einer Druckbereitstellungseinrichtung mit dem fließfähigen Medium versorgt wird,
wobei der Solldruck in wenigstens einem Reservoir geregelt wird,
und wobei dieser Solldruck mit einem Ist-Druck in diesem Reservoir verglichen wird, und ein für diesen Vergleich charakteristischer Wert ermittelt wird,
**dadurch gekennzeichnet, dass**
anhand dieses Werts ein Offsetwert geregelt wird und insbesondere derart geregelt wird, dass sich im Reservoir ein vorgegebener Druck und insbesondere der Soll-Druck einstellt.

2. Verfahren nach Anspruch 1,
**dadurch gekennzeichnet, dass**
wenigstens zwei Betriebszustände der Vorrichtung definiert werden und wobei der Offset in Abhängigkeit von verschiedenen Betriebszuständen geregelt wird.

3. Verfahren nach Anspruch 2,
**dadurch gekennzeichnet, dass** der Offset in den jeweiligen Betriebszuständen derart geregelt wird, dass der Soll-Druck im Reservoir über alle Betriebszustände konstant ist.

4. Verfahren nach wenigstens einem der vorangegangenen Ansprüche,
**dadurch gekennzeichnet, dass**
der Istdruck mittels einer Druckmesseinrichtung gemessen wird und insbesondere einer in dem Reservoir angeordneten Druckmesseinrichtung.

5. Verfahren nach wenigstens einem der vorangegangenen Ansprüche,
**dadurch gekennzeichnet, dass**
in wenigstens einem Betriebszustand das Reservoir mit dem fließfähigen Medium befüllt wird und dabei ein Druck des fließfähigen Mediums geregelt wird und bevorzugt iterativ auf den Solldruck geregelt wird.

6. Verfahren nach wenigstens einem der vorangegangenen Ansprüche,
**dadurch gekennzeichnet, dass**
der für den Vergleich charakteristische Wert eine Differenz oder ein Verhältnis der Drücke ist.

7. Verfahren nach dem vorangegangenen Anspruch,
**dadurch gekennzeichnet, dass**
der Druck im Reservoir mittels eines Domdruckreglers geregelt wird.

8. Verfahren nach wenigstens einem der vorangegangenen Ansprüche,
**dadurch gekennzeichnet, dass**
wenigstens zeitweise ein Anteil des fließfähigen Mediums von einem Reservoir und/oder dem zu expandierenden Behältnis in ein anderes Reservoir recycelt wird.

9. Verfahren nach wenigstens einem der vorangegangenen Ansprüche,
**dadurch gekennzeichnet, dass**
die Druckbereitstellungseinrichtung hinsichtlich der Höhe des von ihr ausgegebenen Druckes gesteuert wird und/oder der von der Druckbereitstellungseinrichtung bereitgestellte Druck von einer Reduzierstation auf den jeweiligen Reservoirdruck reduziert wird.

10. Verfahren nach wenigstens einem der vorangegangenen Ansprüche,
**dadurch gekennzeichnet, dass**
die Reduzierstation ein Regelglied und ein Stellglied verwendet,
wobei das Stellglied das Regelglied ansteuert, um einen Soll-Druck im Reservoir einzuregeln, wobei es sich insbesondere bei dem Regelglied um einen Domdruckregeler handelt und/oder es sich insbesondere bei dem Stellglied um ein Proportionalventil handelt.

11. Vorrichtung (1) zum Umformen von Kunststoffvorformlingen (10) zu Kunststoffbehältnissen (15) mit wenigstens eine Umformungsstation (20), welche mittels einer Beaufschlagungseinrichtung (84) Kunststoffvorformlinge (10) mit einem fließfähigen und insbesondere gasförmigen Medium beaufschlagt und diese so zu den Kunststoffbehältnissen (15) umformt, wobei die Umformungsstation (20) die Kunststoffvorformlinge (10) mit unterschiedlichen Druckniveaus (p1, Pi, p2) beaufschlagt, wobei die Vorrichtung (1) wenigstens ein erstes Reservoir (2a) zum Speichern des fließfähigen Mediums unter einem ersten Druck und ein zweites Reservoir zum Speichern des fließfähigen Mediums unter einem zweiten Druck aufweist und wenigstens eine Zuführeinrichtung (98) vorgesehen ist, welche das fließfähige Medium von diesen Reservoirs den Kunststoffvorformlingen (10) zuführt und weiterhin eine Druckbereitstellungseinrichtung (7) vorgesehen ist, welche wenigstens eines dieser Reservoirs (2a) mit dem fließfähigen Medium versorgt,
wobei der Solldruck in wenigstens einem Reservoir regelbar ist,
und wobei dieser Solldruck mit einem Ist-Druck in diesem Reservoir vergleichbar ist, und ein für diesen Vergleich charakteristischer Wert ermittelbar ist,
**dadurch gekennzeichnet, dass**
der von der Druckbereitstellungseinrichtung ausgegebene Druck steuerbar ist und/oder die Vorrichtung eine Reduzierstation (30) aufweist, welche den von der Druckbereitstellungseinrichtung an dieses Reservoir zugeführten Druck regelt.

12. Vorrichtung (1) nach wenigstens einem der vorangegangenen Ansprüche,
**dadurch gekennzeichnet, dass**
wenigstens zeitweise das fließfähige Medium von dem zu expandierenden Behältnis oder dem zweiten Reservoir in das erste Reservoir führbar ist.

13. Vorrichtung (1) nach wenigstens einem der vorangegangenen Ansprüche,
**dadurch gekennzeichnet, dass**
die Reduzierstation (30) ein Regelglied und ein Stellglied aufweist, wobei bevorzugt das Regelglied ein Domdruckregler und/oder das Stellglied ein Proportionalventil ist und/oder die Vorrichtung eine Vergleichseinrichtung aufweist, welche dazu geeignet ist, einen Soll-Druck in einem Reservoir mit einem Ist-Druck in diesem Reservoir zu vergleichen und einen für diesen Vergleich charakteristischen Wert auszugeben und bevorzugt eine Regeleinrichtung den Druck in diesem Reservoir basierend auf diesem charakteristischen Wert regelt.

14. Vorrichtung (1) nach wenigstens einem der vorangegangenen Ansprüche,
**dadurch gekennzeichnet, dass**
wenigstens ein Reservoir und bevorzugt mehrere Reservoirs als Ringkanal ausgebildet ist.

15. Vorrichtung (1) nach wenigstens einem der vorangegangenen Ansprüche,
**dadurch gekennzeichnet, dass**
die Umformungsstation eine Ventilanordnung mit einer Vielzahl von Ventilen aufweist, um die Behältnisse mit unterschiedlichen Druckstufen zu beaufschlagen, wobei bevorzugt wenigstens eines dieser Ventile ein Proportionalventil ist.
